# EUROPÄISCHE PATENTANMELDUNG

(11) **EP 2 033 777 A2**
(43) Veröffentlichungstag der Anmeldung: **11.03.2009**
(21) Anmeldenummer: 08015355.4
(22) Anmeldetag: 29.08.2008
(51) Int. Cl.: B32B 38/06, E04F 15/02

(54) **Verfahren zur Herstellung einer Fußbodenplatte und danach hergestellte Fußbodenplatte**

(30) Priorität: 31.08.2007 DE 102007041413
(71) Anmelder: Wemhöner Surface Technologies GmbH & Co. KG, 32052 Herford (DE)
(72) Erfinder: Wemhöner, Heiner, 32052 Herford (DE)
(74) Vertreter: Rolf, Gudrun

(57) **Zusammenfassung**

Es wird eine Fußbodenplatte und ein vereinfachtes Verfahren zur ihrer Herstellung aus einer ebenen Trägerplatte und einer Oberflächenbeschichtung mindestens auf der nach oben gerichteten Seite der Trägerplatte zur Verfügung gestellt, welches einfach und effektiv durchführbar ist und das eine leichtere Auslegung der Pressen erlaubt, sodass die Herstellung der Fußbodenplatte mit einem erheblich verminderten Aufwand an Energie erfolgen kann, was dadurch erreicht wird, dass als Oberflächenbeschichtung für die nach oben gerichtete Seite einer Trägerplatte (21) eine einzelne, mit einem Flächendekor versehene Finishfolie (18;19) in einem Kleber- oder Leimbett auf der Trägerplatte (21) aufgebracht und in die Finishfolie (18;19) eine dekorunabhängige oder eine dekorsynchrone Oberflächenstruktur eingeprägt wird.

## Beschreibung

Die Erfindung betrifft ein Verfahren zur Herstellung einer Fußbodenplatte sowie die Fußbodenplatte selber gemäß den Oberbegriffen der Patentansprüche 1 und 12.

Ein bekanntes Fußbodenlaminat, wie es in der DE 203 11 569 U1 beschrieben ist, besteht aus einer Trägerplatte, die mit einer Dekorschicht aus Folie oder Papier versehen ist und die nach oben von einer weiteren Nutz- und Verschleißschutzschicht überdeckt ist, welche großflächig transparent ausgebildet sein muss. Das Herstellungsverfahren eines solchen Fußbodenlaminates ist aufgrund der Mehrschichtigkeit der Deckschicht aufwändig und kostenintensiv und erfordert zudem sehr massive Pressen die einen hohen Pressdruck erzeugen können und hierzu unverhältnismäßig viel Energie verbrauchen.

Aufgabe der Erfindung ist es, eine einfacher herstellbare Fußbodenplatte und ein Verfahren zu deren Herstellung zur Verfügung zu stellen, welches einfach und effektiv durchführbar ist und das eine leichtere Auslegung der Pressen erlaubt, sodass die Herstellung der Fußbodenplatte mit einem erheblich verminderten Aufwand an Energie erfolgen kann.

Die Lösung dieser Aufgabe erfolgt in Verbindung mit den Oberbegriffsmerkmalen der Ansprüche 1 und 12 erfindungsgemäß im Zusammenhang mit den kennzeichnenden Teilen der genannten Ansprüche.

Dadurch, dass als Oberflächenbeschichtung der nach oben gerichteten Seite einer Trägerplatte nur eine einzelne, mit einem Flächendekor versehene Finishfolie in einem Kleber- oder Leimbett auf der Trägerplatte aufgebracht und in diese Finishfolie eine dekorunabhängige oder eine dekorsynchrone Oberflächenstruktur eingeprägt wird, können die zur Durchführung des Verfahrens erforderlichen Pressen, seien es je nach gewähltem Verfahren Walzenpressen oder sogenannte Kurztakt Plattenpressen, weniger massiv ausgeführt werden, was folgerichtig auch zu einem geringeren Energieverbrauch der Presse und damit des gesamten Verfahrens führt.

Als Oberflächenbeschichtung wird erfindungsgemäß eine Beschichtungsfolie aus einer hoch abriebfesten widerstandsfähigen Finishfolie aus Kunststoff verwandt, die bevorzugterweise mit Nanopartikeln beschichtet ist, welche im Wesentlichen zur Steigerung der mechanischen Widerstandskraft der Finishfolie beitragen.

Hierdurch erübrigt sich die Anordnung einer zweiten durchsichtigen Schutzschicht, wodurch sich das Herstellungsverfahren deutlich vereinfacht. Je nach Nutzung der unterschiedlichen Verfahrensschritte des erfindungsgemäßen Verfahrens lässt sich eine Fußbodenplatte herstellen, die entweder nur mit einer gering ausgeprägten Oberflächenstruktur versehen ist, wie etwa die Nachbildung von Holzporen, wobei diese Fußbodenplatte nach kaschieren der Folie von einer Rolle oder als Einzelblatt durch eine Prägewalze und eine nachfolgende Glättwalze hindurchgeführt wurde. Soll die Oberflächenstruktur dagegen stärker ausgeprägt sein, kann die mit der Finishfolie kaschierte Trägerplatte in einer Plattenpresse, einer sog. Kurztaktpresse, fertig bearbeitet werden, wobei unter dem oberen Presstisch der Presse ein Strukturgeber als Pressblech vorgesehen ist, welcher die Struktur im Produkt fixiert.

Eine besonders vorteilhafte Ausführungsform der erfinderischen Fußbodenplatte ist jedoch mit einer dekorsynchron geprägten Oberflächenstruktur versehen, wobei im Verfahrensablauf sichergestellt werden muss, dass die Lage der im Leimbett auf die Trägerplatte aufgelegten Finishfolie passend zum Dekor des Strukturgebers ausgerichtet ist, was nach einer erforderlichen Dekorvermessung durch Ausrichtung der mit der Finishfolie belegten Trägerplatte vor dem oder beim Transport in die Plattenpresse oder in der geöffneten Presse erfolgen kann oder durch ein Ausrichten des Strukturgebers unterhalb des oberen Presstisches, wobei beide Korrektursysteme auch gemeinsam genutzt werden können.

Bevorzugterweise ist die so erzeugte Fußbodenplatte etwa mit einer Oberflächenstruktur und einem Flächendekor versehen, welches die natürliche Textur von Holz täuschend echt nachbildet.

Die Prägetiefe der räumlichen Oberflächenstruktur in der erfindungsgemäßen Fußbodenplatte kann vorteilhafterweise bis zu 1,5mm betragen.

Nachfolgend wird das Verfahren zur Herstellung einer erfindungsgemäßen Fußbodenplatte anhand einer Skizze des Verfahrensablaufes näher beschrieben. Es zeigt:

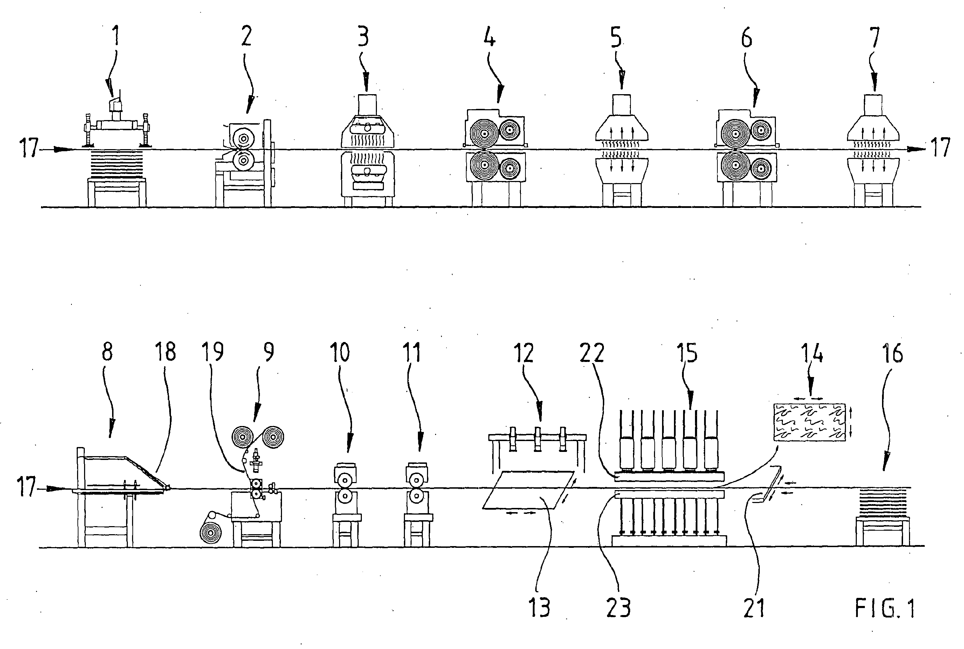

Fig. 1 eine Prinzipskizze des Durchlaufs einer Trägerplatte durch aufeinanderfolgende oder alternativ auszuführende Verfahrensschritte

Grundsätzlich zeichnet sich das Verfahren zur Herstellung einer Fußbodenplatte dadurch aus, dass eine ebene Trägerplatte 21 mit einer Oberflächenbeschichtung versehen wird, wobei als Oberflächenbeschichtung für die nach oben gerichtete Seite einer Trägerplatte 21 eine einzelne, mit einem Flächendekor versehene Finishfolie 18;19 in einem Kleber- oder Leimbett auf der Trägerplatte 21 aufgebracht und eine dekorunabhängige oder eine dekorsynchrone Oberflächenstruktur in die Finishfolie 18;19 eingeprägt wird. Die Finishfolie 18;19 ist mit Nanopartikeln beschichtet.

Das Herstellungsverfahren beginnt damit, das in einem 1. Verfahrensschritt die Trägerplatte 21 von einer Beschickvorrichtung 1 auf eine Transportstrecke 17 gegeben wird, in einem 2. Verfahrensschritt die Trägerplatte 21 in einer Klebstoffauftragsvorrichtung 6 mit einem Kleber oder Leim versehen wird und sie in einem 3. Verfahrensschritt von einer Beschickvorrichtung 8, wie einem Blattleger, mit einem einzelnen Folienblatt der Finishfolie 18 oder von einer Folienabroll- und Zuschneidevorrichtung 9 mit einem Folienabschnitt der Finishfolie 19 kaschiert wird, woraufhin der so erzeugte Platten-Folien-Stapel 13 in einem 4. Verfahrensschritt entweder durch eine Prägewalze 10 und eine nachfolgende Glättwalze 11 geführt wird, wo die Finishfolie 18;19 auf der Trägerplatte 21 über einen Liniendruck mit einer gering ausgeprägten Oberflächenstruktur, wie etwa Poren, versehen wird oder der Platten-Folien-Stapel 13 in eine Plattenpresse 15 befördert wird, wo in die Finishfolie 18;19 auf der Trägerplatte 21 eine stark ausgeprägte dekorunabhängige oder dekorsynchrone Oberflächenstruktur eingeprägt wird, woraufhin die fertige Fußbodenplatte in einem 5. Verfahrensschritt von der Transportstrecke 17 auf einen Plattenstapel 16 abgestapelt wird.

Nach dem 1. Verfahrensschritt kann sich ein Reinigungsschritt der Trägerplatte 21 anschließen, die in einer Reinigungsvorrichtung 2, etwa mittels Bürsten, gereinigt wird.

Diesem oder dem 1. Verfahrensschritt nachfolgend kann die Trägerplatte 21 in einem weiteren Zwischenschritt in einer Vorheizeinrichtung 3 vorgeheizt werden, um die nachfolgenden Verfahrensschritte beschleunigen zu können.

Bei der Verwendung eines Zwei-Komponenten-Klebersystems ist es erforderlich vor dem 2. Verfahrensschritt eine 1. Kleber-Komponente in einem 1. Beschichtungsschritt von einer Klebeauftragsvorrichtung 4 auf die Trägerplatte 21 aufzubringen. Diesem Verfahrensschritt kann ein weiterer Verfahrensschritt folgen, in dem ein Abdunsten der 1. Kleberkomponente in einer entsprechenden Abzugsvorrichtung 5 erfolgt. Ein ähnlicher Verfahrensschritt ist auch nach dem Aufbringen der 2. Kleber-komponente nach dem 2. Verfahrensschritt möglich, in dem auch der Reaktionsstart des Klebers eingeleitet und beschleunigt werden kann.

Die nach dem 3. Verfahrensschritt durch eine Prägewalze 10 und eine alternative Glättwalze 11 hindurch geführte Trägerplatten-Folien-Stapel 13 wird anschließend als bereits fertige Fußbodenplatte im Durchlauf entlang der Transportstrecke 17 durch die nicht in Betrieb genommene Dekor-Vermessungsvorrichtung 12 und die offene Presse 15 hindurch geführt und von der Transportstrecke 17 auf den Plattenstapel 16 abgestapelt.

Ein in einer Plattenpresse 15 weiter verarbeiteter Platten-Folien-Stapel 13 durchläuft vor der Plattenpresse 15 eine Dekorvermessung mit einer optischen Dekor-Vermessungsvorrichtung 12, wonach der Stapel 13 vor oder während des Transportes in die geöffnete Presse 15 oder zwischen den geöffneten Presstischen 22;23 der Plattenpresse 15 zu einem unter den oberen Presstisch 22 angeordneten Strukturgeber 14 passend zum Dekor der Finishfolie 18;19 ausgerichtet wird, wozu alternativ oder zusätzlich auch der Strukturgeber 14 selber relativ zum oberen Presstisch 22 der Plattenpresse 15 ausgerichtet werden kann.

Durch die Menge und die Art des im 2. Verfahrensschritt aufgebrachten Klebers lässt sich die Form der Prägung und/ oder die Prägetiefe in einem geringen Bereich beeinflussen, wobei als Kleber vorteilhafterweise duroplastisch aushärtende Harze bzw. Harnstoffleime verwendet werden. Die Prägetiefe der räumlichen Oberflächenstruktur beträgt bis zu 1,5mm. Die damit erzeugten Fußbodenplatten sind dadurch sehr widerstandsfähig gegen hohe thermische und mechanische Belastung sowie gegen die meisten haushaltsüblichen Laugen und Säuren.

## Patentansprüche

1. Verfahren zur Herstellung einer Fußbodenplatte aus einer ebenen Trägerplatte und einer Oberflächenbeschichtung mindestens auf der nach oben gerichteten Seite der Trägerplatte, **dadurch gekennzeichnet, dass** als Oberflächenbeschichtung für die nach oben gerichtete Seite einer Trägerplatte (21) eine einzelne, mit einem Flächendekor versehene Finishfolie (18;19) in einem Kleber- oder Leimbett auf der Trägerplatte (21) aufgebracht und in die Finishfolie (18;19) eine dekorunabhängige oder eine dekorsynchrone Oberflächenstruktur eingeprägt wird.

2. Verfahren nach Anspruch 1, **dadurch gekennzeichnet, dass** in einem 1. Verfahrensschritt die Trägerplatte (21) von einer Beschickvorrichtung (1) auf eine Transportstrecke (17) gegeben wird, in einem 2. Verfahrensschritt die Trägerplatte (21) in einer Klebstoffauftragsvorrichtung (6) mit einem Kleber oder Leim versehen wird und sie in einem 3. Verfahrensschritt von einer Beschickvorrichtung (8) wie einem Blattleger mit einem einzelnen Folienblatt der Finishfolie (18) oder von einer Folienabroll- und Zuschneidevorrichtung (9) mit einem Folienabschnitt der Finishfolie (19) kaschiert wird, der so erzeugte Platten-Folien-Stapel (13) in einem 4. Verfahrensschritt entweder durch eine Prägewalze (10) und eine Glättwalze (11) geführt wird, wo die Finishfolie (18;19) auf der Trägerplatte (21) über einen Liniendruck mit einer gering ausgeprägten Oberflächenstruktur wie Poren versehen wird oder in eine Plattenpresse (15) befördert wird, wo in die Finishfolie (18;19) auf der Trägerplatte (21) eine stark ausgeprägte dekorunabhängige oder dekorsynchrone Oberflächenstruktur eingeprägt wird, woraufhin die fertige Fußbodenplatte in einem 5. Verfahrensschritt von der Transportstrecke (17) auf einen Plattenstapel (16) abgestapelt wird.

3. Verfahren nach Anspruch 2, **dadurch gekennzeichnet, dass** nach dem 1. Verfahrensschritt die Trägerplatte (21) in einem Reinigungsschritt in einer Reinigungsvorrichtung (2) gereinigt wird.

4. Verfahren nach Anspruch 2 oder 3, **dadurch gekennzeichnet, dass** nach dem 1. Verfahrensschritt oder nach dem Reinigungsschritt der Trägerplatte (21) diese in einem Zwischenschritt in einer Vorheizeinrichtung (3) vorgeheizt wird.

5. Verfahren nach einem der vorgenannten Ansprüche, **dadurch gekennzeichnet, dass** bei der Verwendung eines 2-Komponenten-Klebersystems vor dem 2. Verfahrensschritt eine 1. Kleber-Komponente in einem 1. Beschichtungsschritt von einer Kleberauftragsvorrichtung (4) auf die Trägerplatte (21) aufgebracht wird.

6. Verfahren nach Anspruch 5, **dadurch gekennzeichnet, dass** in einem nachfolgenden Verfahrensschritt ein Abdunsten der ersten Kleberkomponente in einer entsprechenden Abzugsvorrichtung (5) erfolgt.

7. Verfahren nach Anspruch 2, **dadurch gekennzeichnet, dass** nach dem 2. Verfahrensschritt ein Abdunsten der 2. Kleberkomponente bzw. ein Reaktionsstart des Klebers in einer entsprechenden Abzugsvorrichtung (7) eingeleitet wird.

8. Verfahren nach einem der vorgenannten Ansprüche, **dadurch gekennzeichnet, dass** der in einer Plattenpresse (15) weiter bearbeitete Platten-Folien-Stapel (13) des 4. Verfahrensschrittes vor der Plattenpresse (15) eine Dekorvermessung in einer optischen Dekorvermessungsvorrichtung (12) durchläuft und der Stapel (13) während des Transportes oder zwischen den geöffneten Presstischen (22;23) der Plattenpresse (15) passend zu einem unter dem oberen Presstisch (22) angeordneten Strukturgeber (14) oder/ und der Strukturgeber (14) relativ zum oberen Presstisch (22) passend zum Dekor der Finishfolie (18,19) ausgerichtet wird.

9. Verfahren nach einem der vorgenannten Ansprüche, **dadurch gekennzeichnet, dass** die Prägetiefe und/ oder die Form der Prägung durch die Art und die Menge des verwendeten Klebers variiert wird.

10. Verfahren nach einem der vorgenannten Ansprüche, **dadurch gekennzeichnet, dass** als Kleber duroplastisch aushärtende Harze oder Harnstoffleime verwendet werden.

11. Verfahren nach einem der vorgenannten Ansprüche, **dadurch gekennzeichnet, dass** eine Trägerplatte (21) auf ihrer Transportstrecke (17) nacheinander alle Vorrichtungen (1;2;3;4;5;6;7;8;9;10;11;12;15;16) durchläuft, die je nach gewünschtem Verfahrensprodukt aktiviert oder deaktiviert werden.

12. Fußbodenplatte mit einem mehrschichtigen Aufbau aus einer ebenen Trägerplatte und einer Oberflächenbeschichtung mindestens auf der nach oben gerichteten Seite der Trägerplatte, **dadurch gekennzeichnet, dass** die Beschichtungsfolie aus einer hoch abriebfesten widerstandsfähigen Finishfolie (18;19) aus Kunststoff besteht, die mittels einer Kleber- oder Leimschicht auf der Trägerplatte (21) aufgeklebt ist, wobei in die Finishfolie (18;19) in einer Presse (10;15) eine räumliche Oberflächenstruktur eingeprägt ist.

13. Fußbodenplatte nach Anspruch 12, **dadurch gekennzeichnet, dass** die Finishfolie (18;19) mit Nanopartikeln beschichtet ist.

14. Fußbodenplatte nach Anspruch 12 oder 13, **dadurch gekennzeichnet, dass** die Finishfolie (18;19) ein Flächendekor aufweist, in welches die Oberflächenstruktur dekorsynchron eingeprägt ist.

15. Fußbodenplatte nach Anspruch 14, **dadurch gekennzeichnet, dass** die Oberflächenstruktur und das Flächendekor der Finishfolie (18;19) die natürliche Textur von Holz nachbilden.
